# EUROPEAN PATENT APPLICATION

(11) **EP 2 209 301 A1**
(43) Date of publication of application: **21.07.2010**
(21) Application number: 08291146.2
(22) Date of filing: 04.12.2008
(51) Int. Cl.: H04N 5/232, G06F 3/01

(54) **Camera control method for remote controlling a camera and a related camera control server**

(71) Applicant: Alcatel Lucent, 75008 Paris (FR)
(72) Inventor: Stevens, Christoph, 9190 Stekene (BE); Flothmann, Erik, 2960 Sint-Job-in-'t-Goor (BE); Suykens, Tom, 2850 Boom (BE)
(74) Representative: Narmon, Gisèle Marie Thérèse

(57) **Abstract**

The present invention relates to a Camera control method for remote controlling a Camera and a related camera control server. The camera upon recording, generates at least one media asset and stores the at least one media-asset in a media storage device. The camera control method comprises a step of controlling the remote camera via a first communications device that is coupled to said camera via a Camera control server.

The method of the present invention further comprises the steps of the first communication device sending a request to the camera control server for provisioning the media asset generated by the camera to the first communications device and subsequently the said Camera control server provides the communications device with the media asset-information obtained from the camera.

## Description

The present invention relates to a Camera control method for remote controlling a Camera as described in the preamble of claim 1.

Such a subject is already known in the art, e.g. from the following concept existing at some attractions (for example log flume attraction) where media assets are generated, called pictures are taken from the people passing by. These media assets, called pictures can be purchased at a shed at the end of the attraction. A person awaits the pictured person to point the generated media asset on a television screen in order to have the media asset printed. The media asset, called picture can be ordered from a preview wall containing all pictures of a certain period. This situation is disadvantageous in that the pictured person needs to search for his picture and wait till the printout of the picture at the right format is ready if ordered. Further, the person to be pictured has no influence on the content of the picture, e.g. the moment the picture is taken.

An object of the present invention is to provide a Camera control method for remote controlling a Camera of the above known type but wherein the person of whom a media asset is generated is in control of the recording of the camera for generating the media asset. Another further object of the present invention is that the pictured person of the known situation gets at his disposal media asset information immediately after the generation in an easy way.

According to the invention, this object is achieved by the Camera control method for remote controlling a Camera according to claim 1 and the camera control server according to claim 4.

Indeed, by first controlling the remote camera via a first communications device where the camera is coupled to the first communications device via a Camera control server the first communication device sending a request to the camera control server for provisioning the media asset generated by the camera to the first communications device and the Camera control server providing the first communications device with the media asset-information obtained from the camera, the user is able to control the recording and in addition is enabled to at least obtain media asset information like a preview, a URL to the location where the picture can be retrieved or even full picture information on the communications device with which the media asset generation is controlled.

Such a media asset may be a picture or video both possibly in combination with sound.

Another characterizing embodiment of the present invention is the method according to claim 2 and the camera control server according to claim 5.

In addition, if upon receipt of the request, the camera control device instructs the camera to start recording and generate a media asset and subsequently the camera control device obtaining the media asset from the camera the camera is steered to record at a certain moment of time.

Another alternative characterizing embodiment of the present invention is the method according to claim 3 and the camera control server according to claim 6.

In addition the camera forwards at least one media asset generated, i.e. a picture or movie recorded, including timing information towards the camera control server and the camera control device then selects a media asset from the at least one media asset generated based on timing of the request. The camera may continuously generate media assets each of them at least being identified by timing information where at the request the appropriate media asset is elected based on the timing information of the request.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:

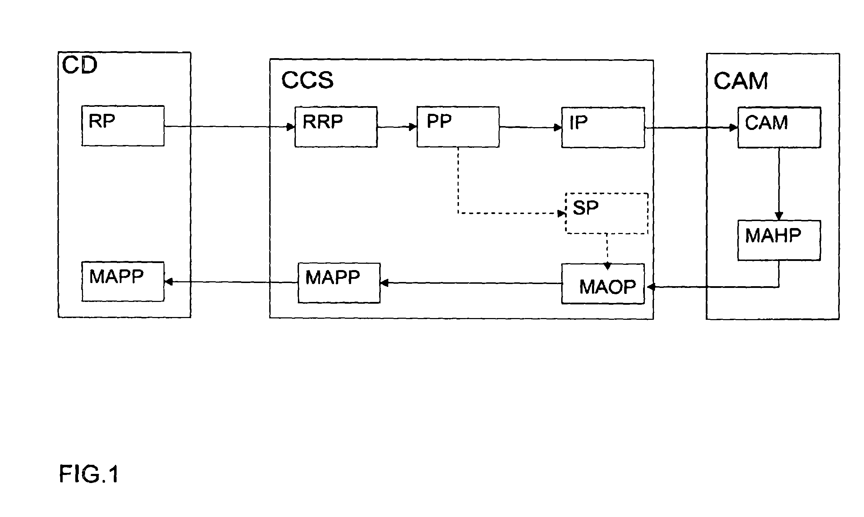

Fig. 1 represents the functional representation of a communications system for applying the Camera control method for remote controlling a Camera, a related communications device, Camera Control Server CCS and a controlled camera CAM in accordance with the present invention.

This figure includes the functional built-up of the relevant devices of the present invention, i.e. a related communications device CD, camera control server CCS and a controlled camera CAM.

In the following paragraphs, referring to the drawings, an implementation of the Camera control method for remote controlling a Camera, a related communications device, camera control server and a controlled camera in accordance with the present invention according to the present invention will be described.

In the first paragraph of this description the main elements of the communications system as presented in FIG. 1 are described. In the second paragraph, all connections between the before mentioned elements and described means are defined. Subsequently all relevant functional means of the communications device CD, the camera control server CCS, and the related camera are described followed by a description of all interconnections. In the succeeding paragraph the actual execution of the Camera control method for remote controlling a Camera is described.

A first essential element of the present invention is the communications device CD for remotely controlling a Camera CAM. This communications device CD is enabled to communicate over a common telephone interface like PSTN ,GSM or any other like with the camera control server CCS. Further there is a Camera control server CCS for enabling remote control of a Camera CAM via the first communications device CD. Further there is a controllable camera for generating multimedia assets at recording of a scene a person or the combinations, such as a family picture with (fake/real) landscape, a theme park attraction action shot etc.

Such a multimedia asset may be a picture, video with or without sound or a combination thereof recorded by the camera via the lens and or microphone.

This communications device CD is enabled to communicate over a common telephone interface like PSTN ,GSM or any other like with the camera control server CCS.

This Camera control server CCS is coupled to the remote controllable camera over a wireless (wifi ,gsm), wired (PSTN , internet) Connection. The camera and the camera control server alternatively may be integrated in one single device.

The communications device CD includes a requesting part RP that is adapted to send a request for provisioning a media asset generated by the camera to the Camera control server CCS and a Multi media asset presentation part MAPP for playing the received multimedia asset received from the camera control server and generated by the camera.

The Camera control server CCS in turn comprises a request receiving part RRP that is adapted to receive a request from the communications device CD for provisioning the media asset generated by the camera to the first communication device CD and a processing part PP that is able to process the incoming request and determine the subsequent action based on the incoming request. The subsequent action may be an instruction dedicated to the camera for the action to be performed by the camera.

The Camera control server CCS may comprise an instruction part IP that is able to instruct, upon receipt of the request, the camera to generate a media asset. i.e. make a recording e.g. being a picture or video and a multi media asset obtaining part MAOP that is adapted to obtain the media asset from the camera. This obtaining may be a push of the media asset from the camera CAM towards the camera control server CCS or alternatively a pull, i.e. the fetching of the media asset from the camera CAM by the camera control server CCS.

Further there is a media asset provisioning part MAPP that is adapted to provide the communications device CD with the media asset-information obtained from the camera CAM.

In an alternative embodiment, it is the case that the camera continuously generates multimedia assets which are stored locally or remotely. In this embodiment, a request for generating a multimedia asset is interpreted by the processing part PP in that at the time a request is sent towards the camera control server the timing information is retrieved from the request and is and a media asset selection criterion is generated by the processing part that is suitable for instructing a selecting part SP that is able to select a media asset from the at least one media asset generated based on timing-information included in the request from the communications device CD and an obtaining part MAOP that is adapted to obtain the at least one media asset generated including timing information from the camera

This obtaining may be a push of the media asset from the camera CAM towards the camera control server CCS or alternatively a pull, i.e. the fetching of the media asset from the camera CAM by the camera control server CCS.

The requesting part RP has an output-terminal that is at the same time an output-terminal of the communications device CD and is coupled to an input-terminal of the Camera Control Server CCS that is at the same time an input-terminal of the request receiving part RRP. The request receiving part RRP further is coupled to the processing part PP that in turn is coupled to the Instructing part IP. The instruction part IP has an output-terminal that is at the same time an output-terminal of the Camera Control Server CCS and is coupled to an input-terminal of the Camera CAM. The additional internal interfacing functionality of the camera is not further described or presented.

The Multi media asset presentation part MAPP has an input-terminal that is at the same time an input-terminal of the communication device CD and is coupled to output-terminal of the Camera Control Server that is at the same time an output-terminal of the media asset provisioning part MAPP that is coupled with an input to an output of the media asset obtaining part MAOP. The media asset obtaining part MAOP has an input-terminal that is at the same time an input-terminal of the Camera Control Server CCS and is coupled to an output-terminal of the camera CAM.

In the previously described alternative embodiment, the processing part is coupled with an output to an input of the Media asset selection part SP that in turn is coupled with an output to an input of the Media Asset Obtaining Part MAOP.

In order to explain the operation of the present invention it is assumed that a person at a nice location where a camera is mounted on a fixed place, protected with glass and strategically placed for delivering the most optimal photo of you and your partner in a beautiful surrounding for example. The customer would stand on the designated place which is identified with a big cross on the ground and in order to take the picture the customer needs to send a Short Message service message, further referred to as SMS to a phone-number or short SMS number indicated on the camera with the customer's mobile phone. The camera control device CCS corresponding to the meant camera is addressed with the in the SMS message used phone number. In case there is more than one camera coupled to the camera control device CCS the meant camera is indicated with an additional user entered code.

The requesting part in this embodiment is a SMS message interface of the customer's Mobile Phone CD.

The request receiving part RRP of the Camera control server CCS, then receives the a request, being the SMS message, from the communications device CD for provisioning the media asset generated by the camera to said first communication device CD. The processing part PP subsequently processes the SMS message and determines the subsequent action based on the incoming request. The subsequent action here is take a picture or make a video recording of the customer standing before the camera at the designated place. Then the instruction part IP instructs the camera to generate a media asset. e.g. make a picture or video recording of the customer together with his wife. The multi media asset obtaining part MAOP of the camera control server CCS then obtains the generated media asset from the camera. This obtaining may be a push of the media asset from the camera CAM towards the camera control server CCS or alternatively a pull, i.e. the fetching of the media asset from the camera CAM by the camera control server CCS. Then subsequently the media asset provisioning part MAPP provides the communications device CD with the media asset-information, i.e. the picture or the video recording of the customer with his wife, obtained from the camera CAM.

This provisioning may be the sending of a wonderful picture to your mobile as a response in the form of a MMS as a preview of the picture or the preview in combination with a URL pointing at information for ordering the full picture or video recording.

In an alternative embodiment, it is the case that the camera continuously generates multimedia assets, takes pictures or produces video recordings which are stored locally or remotely. In this embodiment, a request for generating a multimedia asset by means of the SMS sent by the customer's mobile phone is interpreted by the processing part PP in that at the time a request is sent towards the camera control server the timing information is retrieved from the request, i.e. the SMS message and a media asset selection criterion is generated by the processing part PP that is suitable for instructing the selecting part SP to select the right media asset from the at least one media asset generated based on timing-information included in the request (timestamp - average reaction time user), i.e. the SMS message, from the communications device CD and an obtaining part MAOP that is adapted to obtain the at least one media asset generated including timing information from the camera

Again the result is a wonderful picture and/or URL to picture ordering info is being sent to the customer's mobile as a response in the form of a MMS.

As an alternative for the SMS the mobile phone referred to as communications device CD could connect via Bluetooth or Wifi or any equal wireless technology to an access point which routes the connection further to the CCS. As well as any type of messaging instead of SMS/MMS messaging could be used, for instance, mail, mobile application trigger, web-services API etc.

An additional embodiment could be that the camera contains a processing queue which contains the requests, the queue keeps the entries of all the people at the concert, with a camera at a concert hall directed at the stage, wanting a high quality picture at the same time. The high quality picture is taken once and then a confirmation by means of for example an MMS is being sent to all the entries in the db/queue representing the people all having applied to take this picture at the same time. This feature enables the system to scale.

Multiple cameras could exist which are listening and handling requests from the same queue as such acting as a load balancing In order to distribute the load.

When the user gets its downscaled confirmation picture through an MMS, for which he is paying, he can confirm to have it delivered in any form with or without possibly customized additional artifacts. A multiple of options exist either on paper, at a location in the network of their service provider, uploads to flicker or any web (2.0) application.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. Camera control method for remote controlling a Camera (CAM), said camera upon recording, generating at least one media asset and storing said at least one media-asset in a media storage device, **CHARACTERISED IN THAT** said camera control method comprises a step of controlling said remote camera via a first communications device (CD), said first communications device (CD), being coupled to said camera (CAM) via a Camera control server (CCS), said method further comprising the step of:
a. said first communication device (CD) sending a request to said camera control server (CCS) for provisioning said media asset generated by said camera to said first communications device (CD); and
b. said Camera control server (CCD) providing said communications device (CD) with said media asset-information obtained from said camera (CAM).

2. Camera control method according to claim 1, **CHARACTERISED IN THAT** said method further comprises between steps a. and b. the steps of:
a1. upon receipt of said request, said camera control device (CCD) instructing said camera to generate a media asset; and
a2. said camera control device (CCD) obtaining said media asset from said camera (CAM).

3. Camera control method according to claim 1, where said method further comprises between steps a. and b. the steps of
a1. said camera (CAM) forwarding said at least one media asset generated including timing information towards said camera control server (CCS); and
a2. selecting a media asset from said at least one media asset based on timing of said request.

4. Camera control server (CCS) for enabling remote control of a Camera (CAM) via a first communications device (CD), said camera (CAM) generating at recording, at least one media asset and storing said media-asset in a media storage device, said first communications device (CD) being adapted to trigger said recording of said camera (CAM), **CHARACTERISED IN THAT** said camera (CAM) being coupled to said first communications device (CD) via said Camera control server (CCS), said Camera control server (CCS) comprises:
a. request receiving part (RRP), adapted to receive a request from said first communications device (CD), for provisioning said media asset generated by said camera to said first communication device (CD); and
b. media asset provisioning part (MAPP), adapted to provide said communications device (CD) with said media asset-information obtained from said camera (CAM).

5. Camera control server (CCS) according to claim 1,
**CHARACTERISED IN THAT** said camera control server (CCS) further comprises:
a1. an instruction part (IP), adapted to instruct, upon receipt of said request, said camera to generate a media asset; and
a2. a media asset obtaining part (MAOP), adapted to obtain said media asset from said camera (CAM).

6. Camera control server (CCS) according to claim 1,
**CHARACTERISED IN THAT** said camera control server (CCS) further comprises:
a1. a selecting part (SP), adapted to select a media asset from said at least one media asset based on timing of said request from said communications device (CD); and
a2. obtaining part (MAOP) adapted to obtain said at least one media asset generated including timing information from said camera (CAM).
